# FASCICULE DE BREVET EUROPEEN

(11) **EP 2 540 373 B1**
(45) Date de publication et mention de la délivrance du brevet: **01.03.2017**
(21) Numéro de dépôt: 12004295.7
(22) Date de dépôt: 05.06.2012
(51) Int. Cl.: B01D 46/10, B01D 46/52, B01D 46/00

(54) **Dispositif de filtration à trappe séparable**
Filtervorrichtung mit Trennklappe
Filtering device with separable hatch

(30) Priorité: 28.06.2011 FR 1101983
(43) Date de publication de la demande: 02.01.2013
(73) Titulaire: Valeo Systemes Thermiques, 78320 Le Mesnil Saint Denis (FR)
(72) Inventeur: Lechat, Yvan, 78120 Sonchamp (FR)

(56) Documents cités:
- DE-A1-102005 019 675
- DE-U1-202005 013 646
- DE-U1-202008 010 474
- FR-A1- 2 815 699

## Description

La présente invention concerne un dispositif de filtration d'un flux d'air, notamment pour véhicule automobile. Elle s'applique, plus particulièrement, à la filtration d'un flux d'air circulant dans une installation de ventilation d'un véhicule automobile et destiné à être distribué dans un habitacle du véhicule.

Dans le domaine des dispositifs de filtration d'un flux d'air d'air pour véhicule automobile, il est connu d'installer un filtre dans un boîtier de l'installation de ventilation pour que le flux d'air en circulation dans le boîtier soit traité qualitativement, notamment en captant les polluants et les particules indésirables. Toutefois, le filtre doit cependant être changé régulièrement pour maintenir un niveau de traitement qualitatif du flux d'air propre à être distribué dans l'habitacle du véhicule afin de garantir un niveau de confort aéraulique compatible avec les prescriptions du constructeur du véhicule et les attentes des passagers du véhicule.

Afin d'assurer la maintenance requise du filtre, il est connu, selon une première technologie, d'assurer un démontage d'une trappe fixée sur le boîtier de l'installation de ventilation pour accéder et extraire au filtre usagé et le remplacer par un filtre neuf. Par suite, la trappe est repositionnée pour fermer de manière étanche le boîtier. Selon cette première technologie, la trappe et.le filtre sont deux pièces distinctes. Dans un tel agencement, la trappe n'est pas remplacée lors du changement de filtre. L'inconvénient de cette première technologie réside dans le fait que, au moment de l'assemblage du véhicule, c'est-à-dire lors de la première monte, le montage du filtre nécessite deux opérations successives, augmentant le temps nécessaire à l'assemblage du boîtier et/ou véhicule.

Il est également connu, selon une deuxième technologie, de réaliser un dispositif de filtration comprenant un filtre à air intégrant une trappe et formant ainsi un ensemble monobloc non séparable. Le remplacement du filtre entraîne alors systématiquement le replacement de la trappe. Cependant, la trappe ne présente pas la même nécessité de remplacement que le filtre à air. On comprend donc que cette deuxième technologie impose le remplacement de la trappe qui n'est pas strictement nécessaire. Cela se traduit par une augmentation du coût de fabrication du dispositif de filtration. Le coût d'entretien du véhicule augmente corrélativement.

Le document DE 10 2005 019 675 A1 divulgue un dispositif de filtration d'un flux d'air, pour une installation de ventilation d'un véhicule, comprenant un cadre avec une partie filtrante et un dispositif de fermeture relié entre eux au moyen d'un bandeau de liaison sécable.

Le but de la présente invention est donc de résoudre les inconvénients décrits ci-dessus principalement en proposant un dispositif de filtration d'un flux d'air d'un habitacle de véhicule automobile qui peut être inséré lors de l'assemblage initial du véhicule en une seule et unique étape tout en permettant de récupérer la trappe, pour l'utiliser, si nécessaire, à chaque remplacement de la zone de filtration. On conserve ainsi les avantages du filtre à air selon la deuxième technologie, tout en maintenant le coût de remplacement du filtre à air au niveau de celui selon la première technologie.

L'invention a donc pour objet un dispositif de filtration d'un flux d'air pour une installation de ventilation d'un véhicule, comprenant une partie filtrante destinée à être traversée par le flux d'air et un dispositif de fermeture, destiné à obturer un ouverture ménagée dans un boîtier de l'installation de ventilation. De plus, le dispositif de filtration comprend au moins un moyen de séparation formé entre la partie filtrante et le dispositif de fermeture, apte à autoriser une séparation du dispositif de fermeture et la partie filtrante.

Un tel dispositif de filtration est reconnaissable en ce qu'il est prévu une modification de la structure de liaison entre le dispositif de fermeture, par exemple réalisé sous la forme d'une trappe, et la partie filtrante, formant une portion du dispositif de filtration traversée par le flux d'air. En pratique, le moyen de séparation rend le dispositif de fermeture manoeuvrable par rapport à la partie filtrante. Le dispositif de fermeture peut alors être fléchi par rapport à la partie filtrante pour rompre la liaison mécanique opérée par le moyen de séparation.
Selon une première caractéristique de l'invention, le moyen de séparation comprend au moins une jonction, ou un amincissement, d'un bandeau de liaison reliant la partie filtrante au dispositif de fermeture. La jonction forme une zone de fragilisation qui peut être rompue, notamment par flexions successives du dispositif de fermeture par rapport à la partie filtrante ou par l'emploi d'un outil, en particulier une pince coupante. La jonction peut être réalisée localement est ce sens qu'elle est pratiquée sur une largeur restreinte du bandeau de liaison, par exemple sur une portion présentant une largeur inférieure à 5% de la largeur du bandeau de liaison.

Selon une deuxième caractéristique alternative ou complémentaire, le moyen de séparation comprend au moins une fente traversant le bandeau de liaison. Le dispositif de fermeture est ainsi relié à la partie de filtration par des zones partielles du bandeau de liaison jouxtant la fente.

Selon une autre caractéristique de l'invention, au moins une jonction, ou un amincissement, s'étend entre deux fentes traversant le bandeau de liaison.

Selon une autre caractéristique de l'invention, la fente s'étend selon une direction agencée perpendiculairement à un plan passant par une extrémité du dispositif de fermeture comprenant un bord de recouvrement, destiné à couvrir une portion du boîtier de ventilation entourant l'ouverture à travers laquelle le dispositif de filtration est inséré et extrait. Une telle structure facilite la gestion de l'étanchéité à l'air au niveau de l'ouverture.

Selon encore une caractéristique de l'invention, le moyen de séparation comprend une première fente, une deuxième fente et une troisième fente en forme de « U ». Dans cet agencement, la troisième fente est intercalée entre la première fente et la deuxième fente. Les première et deuxième fentes forment notamment chacune une ouverture de section sensiblement rectangulaire s'étendant selon une direction longitudinale parallèle à chaque branche du « U » formé par la troisième fente.

De manière plus détaillée, selon un exemple particulier de réalisation, une première jonction s'étend entre la première fente et la troisième fente, d'une part,et une deuxième jonction s'étend entre la deuxième fente et la troisième fente, d'autre part.

Le dispositif de filtration comprend aussi un moyen de blocage sécable qui contrôle la séparation entre le dispositif de fermeture et la partie filtrante. Ce moyen de blocage est formé par une encoche débouchant sur une tranche du bandeau à proximité de la première fente et/ou la deuxième fente.

On notera que l'encoche s'étend selon une direction distincte d'une direction d'extension de la jonction. De manière complémentaire, la direction d'extension de l'encoche est parallèle à la direction d'extension de la jonction.

Selon encore une caractéristique de l'invention, la partie filtrante est délimitée par un premier plan définissant une face d'entrée du flux d'air à travers la partie filtrante, le moyen de séparation s'étendant alors dans le premier plan. Autrement dit, le moyen de séparation est ménagé dans un plan délimitant une face du dispositif de filtration recevant le flux d'air à filtrer.

De manière alternative, la partie filtrante est délimitée par un deuxième plan définissant une face de sortie du flux d'air hors de la partie filtrante, le moyen de séparation s'étendant alors dans le deuxième plan. Autrement dit, le moyen de séparation est ménagé dans un plan délimitant une face du dispositif de filtration, par laquelle le flux d'air sort du dispositif de filtration.

Selon une autre alternative, la partie filtrante est délimitée par un premier plan définissant une face d'entrée du flux d'air à travers la partie filtrante et par un deuxième plan définissant une face de sortie du flux d'air hors de la partie filtrante, le moyen de séparation s'étendant dans un troisième plan distinct compris entre le premier plan et le deuxième plan.

Selon encore une autre caractéristique de l'invention, la partie filtrante comprend un média filtrant entouré par un cadre, la jonction du bandeau de liaison constitutif du cadre reliant le cadre au dispositif de fermeture. Le cadre est alors un élément de structure apportant une rigidité à la partie filtrante. Le cadre, vu d'une face traversée par le flux d'air, présente une section trapézoïdale, avantageusement rectangulaire, et un côté de la section trapézoïdale est alors formée par le bandeau de liaison comportant le moyen de séparation. Avantageusement, le cadre est surmoulé sur le média filtrant.

L'invention vise également une installation de ventilation pour véhicule comprenant un boîtier canalisant un flux d'air et comprenant une ouverture. L'installation de ventilation comprend un dispositif de fermeture de l'ouverture issu d'un dispositif de filtration tel que présenté ci-dessus. Le dispositif de fermeture, ainsi séparé du dispositif de filtration, est utilisé pour fermer l'ouverture quand un filtre à air sans trappe intégrée est installé dans le boîtier. Un tel dispositif de fermeture est reconnaissable, notamment, en ce qu'il comprend une partie du moyen de séparation, par exemple une moitié de la jonction.

Enfin, l'invention couvre une installation de ventilation pour véhicule comprenant un boîtier canalisant un flux d'air et dans laquelle un dispositif de filtration tel que défini précédemment est inséré.

Un avantage selon l'invention réside dans la possibilité d'installer la fonction filtration dans un boîtier d'une installation de ventilation pour véhicule selon une unique étape tout en offrant la possibilité de récupérer le dispositif de fermeture pour l'utiliser lors des remplacements successifs du filtre à air. Ceci permet de maintenir les coûts d'entretien du véhicule relativement bas, puisque le filtre installé ultérieurement ne comporte plus de dispositif de fermeture.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- la figure 1 est une vue en perspective d'une première variante de réalisation d'un dispositif de filtration,
- la figure 2 est une vue en coupe longitudinale et en perspective de l'extrémité du dispositif de filtration selon la première variante de réalisation de la figure 1,
- la figure 3 est une vue en perspective d'une deuxième variante de réalisation d'un dispositif de filtration,
- la figure 4 est une vue en coupe longitudinale et en perspective de l'extrémité du dispositif de filtration selon la deuxième variante de réalisation de la figure 3,
- la figure 5 est une vue en perspective d'une troisième variante de réalisation d'un dispositif de filtration selon la présente invention,
- la figure 6 est une vue en coupe longitudinale et en perspective de l'extrémité du dispositif de filtration selon la troisième variante de réalisation de la figure 5, et
- la figure 7 est une vue de détail de l'extrémité du dispositif de filtration selon la troisième variante de réalisation de la figure 5.

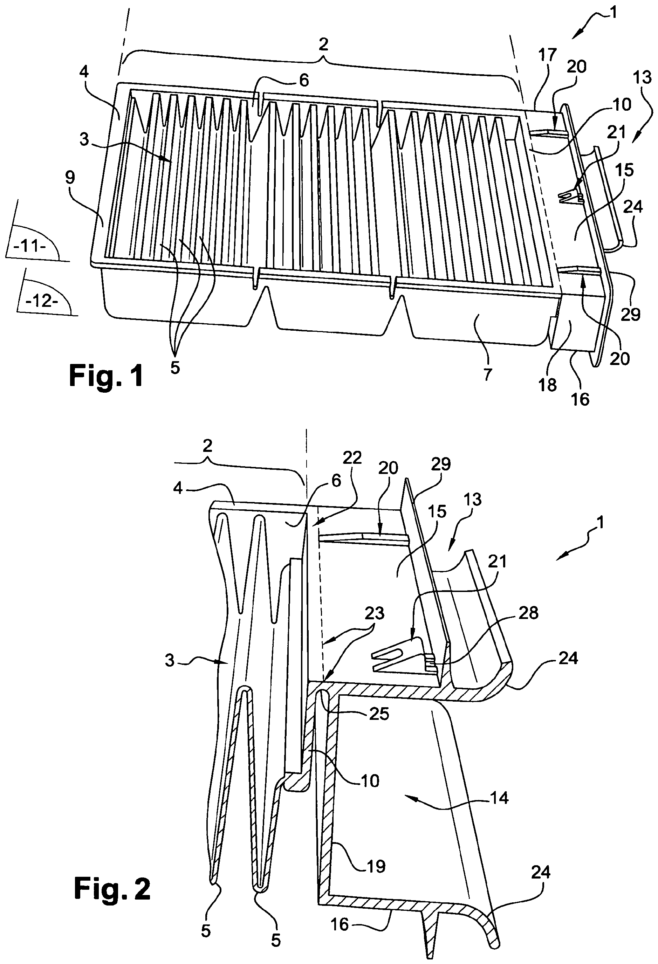

La figure 1 est une vue en perspective d'une première variante de réalisation d'un dispositif de filtration 1. Le dispositif de filtration 1 est destiné à filtrer un flux d'air apte à être distribué dans un habitacle de véhicule. Le dispositif de filtration 1 sert donc à assurer un traitement qualitatif du flux d'air et permet donc de retenir les impuretés, c'est-à-dire les particules et les polluants, en suspension et/ou transportées par le flux d'air. Les impuretés sont, notamment, des poussières et/ou des composés organiques volatils.

En conséquence, le dispositif de filtration 1 est susceptible d'être un filtre à particules ou un filtre combiné, c'est-à-dire un filtre permettant de capter les particules et les gaz nuisibles.

Le dispositif de filtration 1 est monté à l'intérieur d'une installation de ventilation, ou une installation de chauffage ou une installation de chauffage, ventilation et/ou de climatisation, qui équipe le véhicule. Par suite, la présente invention sera décrite, de façon non limitative, en relation avec une installation de ventilation.

L'installation de ventilation comprend notamment un boîtier qui forme une enveloppe dans laquelle des composants de l'installation de ventilation sont disposés. Le boîtier canalise le flux d'air destiné à être distribué dans l'habitacle du véhicule. Le boîtier comprend par ailleurs une ouverture par laquelle le dispositif de filtration 1 est introduit dans le boîtier et extrait du boîtier, de sorte à l'exposer au flux d'air canalisé dans le boîtier.

Le dispositif de filtration 1 comprend une partie filtrante 2 destinée à être traversée par le flux d'air canalisé dans le boîtier. Du point de vue de la filtration, la partie filtrante 2 est la zone active du dispositif de filtration 1, c'est-à-dire la zone destinée à retenir les impuretés à filtrer. La partie filtrante 2 comprend un média filtrant 3 entouré par un cadre 4.

A titre d'exemple, le média filtrant 3 est formé d'un mat, tissé ou non tissé, constitué d'un voile de carde, notamment en une nappe unique. Dans le cadre d'un filtre combiné, le média filtrant 3 comprend également des moyens d'adsorption de gaz, par exemple, constitué par un lit de charbon actif, ou un tissu de carbone souple plissé de la même manière.

En complément, le média filtrant 3 peut être associé à au moins une grille, plissée également, solidarisée ou non au mat. La solidarisation de la grille au mat peut être partielle ou totale et obtenue, par exemple, par soudage aux ultrasons, par collage, par consolidation mécanique, notamment au jet d'eau, ou autre.

Le média filtrant 3 est avantageusement plissé de sorte à augmenter la surface traversée par le flux d'air. Dans cette configuration, le média filtrant 3 comprend donc une série de plis 5.

Le média filtrant 3 est maintenu mécaniquement par le cadre 4. Le cadre 4 est réalisé à partir d'un matériau plastique, par exemple un polypropylène. Le cadre 4 comprend un premier bord longitudinal 6 et un deuxième bord longitudinal 7, autrement appelés parois latérales.

Selon l'exemple de réalisation, le premier bord longitudinal 6 et le deuxième bord longitudinal 7 couvrent, par surmoulage, des extrémités des plis 5 constitutifs du média filtrant 3. Les extrémités des plis 5 sont en forme de V.

Le cadre 4 comprend également un premier bord transversal 9 et un deuxième bord transversal 10 s'étendant entre le premier bord longitudinal 6 et le deuxième bord longitudinal 7, à chaque extrémité du média filtrant 3.

Selon l'exemple de réalisation, le premier bord transversal 9 et le deuxième bord transversal 10 couvrent, par surmoulage, le premier pli 5 et le dernier pli 5, constitutifs du média filtrant 3. Autrement dit, le pli 5 disposé à chaque extrémité du média filtrant 3 est surmoulé sur le bord transversal respectif 9 ou 10 du cadre 4.

Avantageusement, le dispositif de filtration 1 présente une forme générale rectangulaire définissant une face traversée par le flux d'air. Alternativement, le dispositif de filtration 1 peut présenter toutes autres formes géométrique, notamment trapézoïdale.

La partie filtrante 2 est délimitée par un premier plan 11 définissant une face d'entrée du flux d'air à travers la partie filtrante 2 du dispositif de filtration 1. La partie filtrante 2 est encore délimitée par un deuxième plan 12 définissant une face de sortie du flux d'air hors de la partie filtrante 2 du dispositif de filtration 1. Le dispositif de filtration 1 comprend encore un dispositif de fermeture 13. Le dispositif de fermeture 13 assure une fonction d'obturation de l'ouverture réalisée dans le boîtier par laquelle le dispositif de filtration 1 est introduit et/ou extrait.

Le dispositif de fermeture 13 est réalisé en un matériau plastique rigide, avantageusement identique à celui utilisé pour former le cadre 4. Le dispositif de fermeture 13 est également appelé trappe 13.

Le cadre 4 du dispositif de filtration 1 est relié au dispositif de fermeture 13 par un bandeau de liaison 22. Plus particulièrement, le bandeau de liaison 22 est relié au deuxième bord transversal 10 du cadre 4 du dispositif de filtration 1.

Le dispositif de fermeture 13 présente une forme complémentaire à l'ouverture réalisée dans le boîtier. A titre d'exemple, selon le mode de réalisation présenté, le dispositif de fermeture 13 est de forme rectangulaire.

Par ailleurs, préférentiellement, le dispositif de fermeture 13 présente un évidement intérieur 14. L'évidement intérieur 14 du dispositif de fermeture 13 est bordé par deux flancs transversaux 15 et 16 et par deux flancs costaux 17 et 18. L'évidement 14 est également délimité par un fond 19, visible sur la figure 2. Tel que défini, le dispositif de fermeture 13 présente une ouverture latérale, disposée à l'opposé du fond 19. Une telle configuration de l'évidement 14 permet de conférer un allégement du dispositif de filtration 1 et une flexibilité des flancs transversaux 15 et 16 et/ou des flancs costaux 17 et 18.

Avantageusement, les flancs transversaux 15 et 16 comprennent, sur leur face externe respective, au moins un dispositif de centrage 20 du dispositif de fermeture 13 par rapport à l'ouverture. Par ailleurs, le dispositif de fermeture 13 comporte un moyen de verrouillage 21 du dispositif de filtration 1, dont la fonction est de retenir le dispositif de filtration 1 dans le boîtier.

Enfin, le dispositif de fermeture 13 est muni d'un dispositif de préhension 24 permettant de saisir le dispositif de filtration 1. De plus, selon l'agencement décrit, le dispositif de préhension 24 permet également de fléchir les flancs transversaux 15 et 16 afin de libérer le moyen de déverrouillage 21.

La figure 2 est une vue en coupe longitudinale et en perspective de l'extrémité du dispositif de filtration 1 selon la première variante de réalisation de la figure 1 comportant le dispositif de fermeture 13.

Le dispositif de filtration 1 comporte un moyen de séparation 23 formé entre la partie filtrante 2 et le dispositif de fermeture 13. Le moyen de séparation 23 a pour fonction d'autoriser une séparation du dispositif de fermeture 13 et de la partie filtrante 2 et de faciliter la désolidarisation du dispositif de fermeture 13 de sorte à en faire deux pièces distinctes. Ainsi, le dispositif de fermeture 13 est susceptible d'être réutilisé alors que la partie filtrante 2 est remplacée.

Le moyen de séparation 23 forme une zone sécable adaptée pour séparer aisément, par exemple suite à un nombre réduit de flexions, le dispositif de fermeture 13 et la partie filtrante 2.

Selon la première variante de réalisation, le moyen de séparation 23 est le seul lien mécanique entre le dispositif de fermeture 13 et la partie filtrante 2.

Dans l'exemple de réalisation des figures 1 et 2, le moyen de séparation 23 prend la forme d'au moins une jonction 25, préférentiellement réalisée sous la forme d'un amincissement 25, présentée sur la figure 2 par une ligne en pointillés.

L'amincissement 25 est ménagé au niveau du bandeau de liaison 22, formant un plat issu de matière entre le deuxième élément transversal 10 du cadre 4 et le dispositif de fermeture 13, en particulier le fond 19 du dispositif de fermeture 13. Ainsi, et avant d'être rompu, l'amincissement 25 assure la liaison mécanique entre la partie filtrante 2 et le dispositif de fermeture 13.

Le moyen de séparation 23 est ici réalisé dans le premier plan 11. Autrement dit, le bandeau de liaison 22 et l'amincissement 25 s'étendent dans un même plan confondu au plan contenant la face d'entrée du flux d'air à travers la partie filtrante 2 du dispositif de filtration 1.

Alternativement, le moyen de séparation 23 peut être disposé dans le deuxième plan 12 contenant la face de sortie du flux d'air hors la partie filtrante 2 du dispositif de filtration 1. Alternativement encore, le moyen de séparation 23 peut être disposé entre le premier plan 11, contenant la face d'entrée du flux d'air à travers la partie filtrante 2 du dispositif de filtration 1, et le deuxième plan 12, contenant la face de sortie du flux d'air hors la partie filtrante 2 du dispositif de filtration 1

A titre d'exemple, la largeur de l'amincissement 25 est comprise entre 5 mm à 10 mm. L'épaisseur de matière de la partie la plus fine de l'amincissement 25 est comprise entre 0,2 mm à 1 mm.

La figure 2 montre aussi un exemple de réalisation du moyen de centrage 20. Il s'agit ici d'une nervure issue de matière sur une des faces externes du et le dispositif de fermeture 13 et présentée, avantageusement, une face biseautée.

A titre complémentaire, le moyen de verrouillage 21 prend, par exemple, la forme d'au moins une dent comportant une face de retenue 28. La face de retenue 28 vient en appui contre une face interne du boîtier de l'installation de ventilation tandis qu'un bord de recouvrement 29 vient en contact sur une face externe du boîtier de l'installation de ventilation. Le bord de recouvrement 29 assure ainsi une fonction de butée et d'étanchéité à l'air au droit de l'ouverture par laquelle le dispositif de filtration 1 est introduit dans le boîtier et/ou extrait du boîtier.

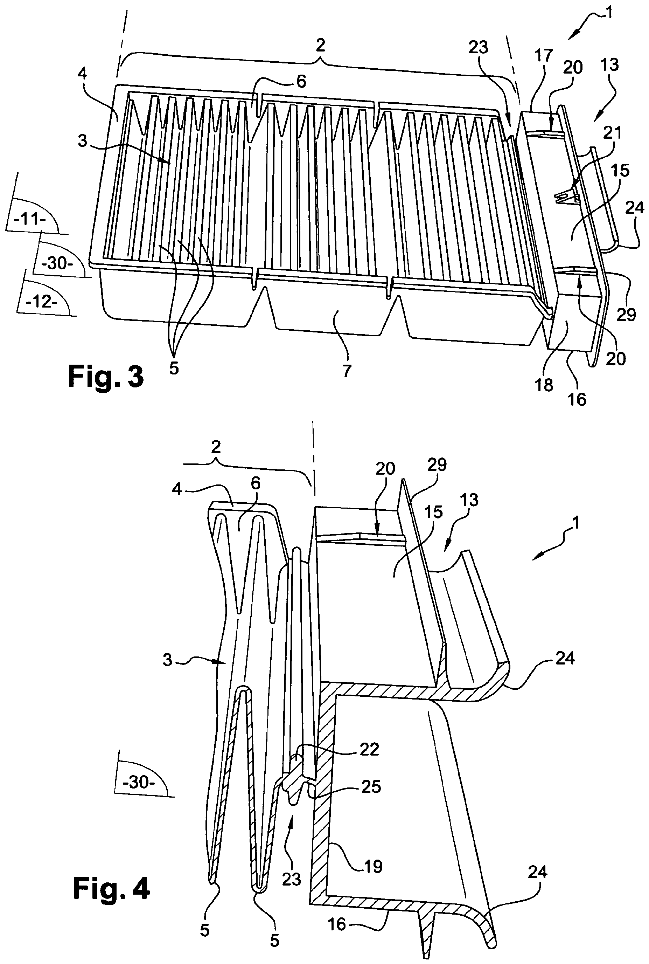

La figure 3 est une vue en perspective d'une deuxième variante de réalisation du dispositif de filtration 1.

Les éléments identiques à ceux du mode de réalisation décrit aux figures 1 et 2 portent les mêmes références. Sauf mention contraire, ces éléments identiques ont les mêmes caractéristiques techniques et les mêmes fonctions et ne seront donc pas détaillés à nouveau. A cet effet, on se reportera à la description des figures 1 et 2.

La deuxième variante de réalisation du dispositif de filtration 1 selon la figure 3 se distingue par la position du bandeau de liaison 22 et de la jonction 25 par rapport au premier plan 11 et au deuxième plan 12. En effet, le moyen de séparation 23 est agencé entre le premier plan 11 et le deuxième plan 12. Autrement dit, le moyen de séparation 23, et en particulier le bandeau de liaison 22, s'étend dans un troisième plan 30 disposé entre le premier plan 11 et le deuxième plan 12. Le troisième plan 30 est parallèle ou incliné par rapport au premier plan 11.

La figure 4 une vue en coupe longitudinale et en perspective de l'extrémité du dispositif de filtration 1 selon la deuxième variante de réalisation de la figure 3. Selon la deuxième variante de réalisation, le bandeau de liaison 22 est issu de matière au niveau du fond 19 du dispositif de fermeture 13. Le troisième plan 30 est, dans l'exemple non limitatif de réalisation des figures 3 et 4, à une distance identique du premier plan 11 et du deuxième plan 12. Le bandeau de liaison 22 supporte la jonction 25. De plus, optionnellement, il comprend un renfort surmoulant l'extrémité du média filtrant 3.

Selon une alternative de réalisation non représentée, la jonction entre le premier élément longitudinal 6 et le bandeau de liaison 22 peut être modifiée. Selon cette alternative, le premier élément longitudinal 6 est terminé par une joue d'épaisseur plus faible que l'épaisseur du premier élément longitudinal 6. La joue est séparée du dispositif de fermeture 13 par une fente s'étendant du premier plan 11 jusqu'au bandeau de liaison 22 et garantit une possibilité d'incliner le dispositif de fermeture 13 par rapport à la partie filtrante 2.

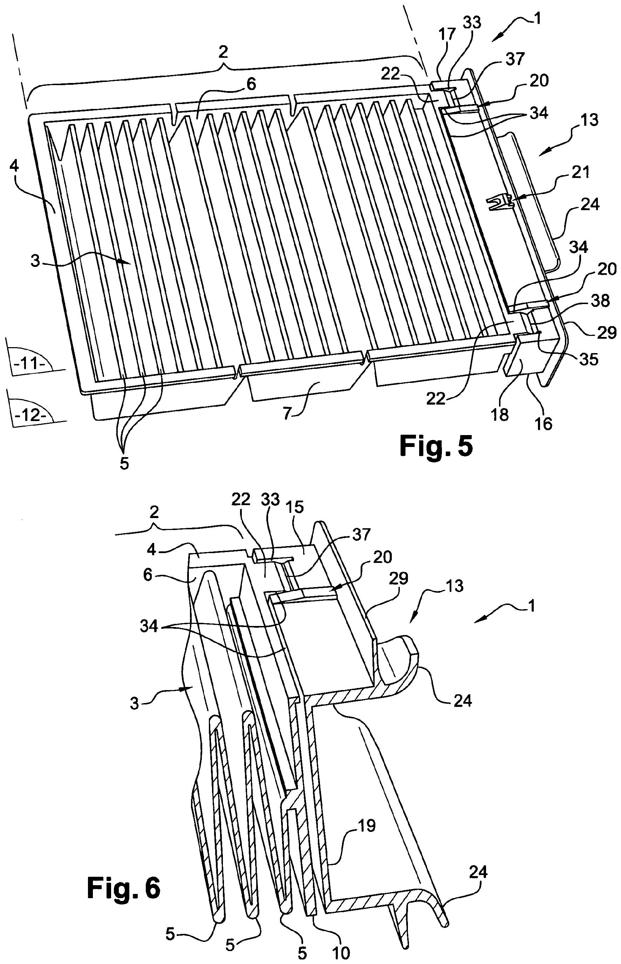

Les figures 5 à 7 montrent une troisième variante de réalisation du dispositif de filtration 1 qui représente la présente invention. Les éléments identiques à ceux des modes de réalisation décrits aux figures 1 à 4 portent les mêmes références. Sauf mention contraire, ces éléments identiques ont les mêmes caractéristiques techniques et les mêmes fonctions et ne donc seront pas détaillés à nouveau. A cet effet, on se reportera à la description des figures 1 à 4.

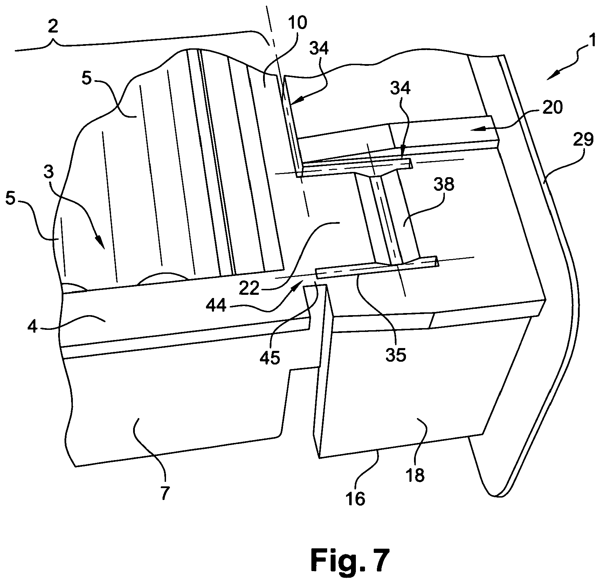

Plus spécifiquement, les figures 6 et 7 sont, respectivement, une vue en coupe longitudinale et en perspective et une vue de détail de l'extrémité du dispositif de filtration 1 selon la troisième variante de réalisation de la figure 5.

Selon la troisième variante de réalisation du dispositif de filtration 1, le moyen de séparation 23 est composé d'au moins une fente 33 traversant le bandeau de liaison 22. La fente 33 est une ouverture allongée traversant de part en part l'épaisseur du bandeau de liaison 22.

Dans l'exemple de réalisation illustré sur les figures 5 à 7, le moyen de séparation 23 comprend trois fentes, à savoir:
- une première fente 33, ménagée sur un premier côté du bandeau de liaison 22 jouxtant le premier bord longitudinal 6,
- une deuxième fente 35, ménagée sur un deuxième côté du bandeau de liaison 22 jouxtant le deuxième bord longitudinal 7, et
- une troisième fente 34, s'étendant dans le bandeau de liaison 22 entre la première fente 33 et la deuxième fente 35.

Selon l'exemple particulier présenté sur les figures 5 à 7, la troisième fente 34 présente une forme en « U ». Plus particulièrement, la base de la troisième fente 34 est disposé le long de la partie filtrante 2 alors que chaque extrémité libre des branches de la troisième fente 34 en forme de « U » se termine du côté du dispositif de fermeture 13. D'une manière générale, la troisième fente 34 est ainsi intercalée entre la première fente 33 et la deuxième fente 35.

On notera que la première fente 33 et/ou la deuxième fente 35 et/ou la troisième fente 34 comportent au moins une portion qui s'étend selon une direction longitudinale 40, correspondant à la direction d'extension du premier bord longitudinal 6 et/ou du deuxième bord longitudinal 7, préférentiellement contenue dans un plan parallèle au premier plan 11 et/ou au deuxième plan 12.

Préférentiellement, l'extrémité libre des branches de la troisième fente 34 en forme de « U » agencée à proximité de la première fente 33 est parallèle à la première fente 33. De même, l'extrémité libre des branches de la troisième fente 34 en forme de « U » agencée à proximité de la deuxième fente 35 est parallèle à la deuxième fente 35.

De façon facultative et/ou complémentaire, le moyen de séparation 23 selon la troisième variante de réalisation comprend au moins une jonction s'étendant, entre la première fente 33 et la troisième fente 34 et/ou, entre la deuxième fente 35 et la troisième fente 34. Préférentiellement, la jonction entre la première fente 33 et la troisième fente 34 et/ou, entre la deuxième fente 35 et la troisième fente 34 est constitué par un amincissement localisé.

Dans le cas d'espèce, le moyen de séparation 23 comprend une première jonction 37, s'étendant entre la première fente 33 et la troisième fente 34, et une deuxième jonction 38, s'étendant entre la deuxième fente 35 et la troisième fente 34.

Selon le mode de réalisation présenté sur les figures 5 à 7, la première jonction 37, respectivement la deuxième jonction 38, s'étend selon une direction perpendiculaire à la direction longitudinale 40 de la première fente 33, respectivement de la deuxième fente 35, et à la partie de la troisième fente 34, immédiatement adjacentes à la première jonction 37, respectivement la deuxième jonction 38.

Les figures 5 et 6 illustrent encore un élément supplémentaire, optionnel, du dispositif de filtration 1. Il s'agit d'un moyen de blocage sécable 44 formé par une encoche 45 agencée dans le bandeau de liaison 22. L'encoche 45 débouche dans une tranche du bandeau de liaison 22. Par encoche, on entend un enlèvement de matière qui s'ouvre au niveau d'un bord ou tranche du bandeau de liaison 22.

Selon l'exemple de réalisation présenté sur les figures 5 à 7, le dispositif de filtration 1 comprend une première encoche 45 réalisée du coté du premier bord longitudinal 6 du cadre 4 et une deuxième encoche 45 réalisée du côté du deuxième bord longitudinal 7 du cadre 4.

La première encoche 45, respectivement la deuxième encoche 45, forme une découpe s'étendant de manière rectiligne le long d'une direction d'extension distincte de la direction d'extension de la première jonction 37, respectivement la deuxième jonction 38, contiguë à la première encoche 45, respectivement la deuxième encoche 45. Avantageusement, la direction d'extension de la première encoche 45, respectivement la deuxième encoche 45, est parallèle à la direction d'extension de la première jonction 37, respectivement la deuxième jonction 38.

La première jonction 37, respectivement la deuxième jonction 38, s'étend selon une direction perpendiculaire à la direction longitudinale 40 de la première fente 33, respectivement la deuxième fente 35. La première jonction 37, respectivement la deuxième jonction 38 est également perpendiculaire à une des branches de la troisième fente 34 en forme de « U ».

La première encoche 45, respectivement la deuxième encoche 45, présente un axe d'extension préférentiellement confondu avec la direction d'extension de la base de la troisième fente 34 en forme de « U » disposée le long de la partie filtrante 2. L'axe d'extension de la première encoche 45, respectivement de la deuxième encoche 45, croise par ailleurs la première fente 33, respectivement la deuxième fente 35.

La partie du bandeau de liaison 22 située entre la première fente 33 et la première encoche 45 sert de moyen de blocage interdisant toute inclinaison non souhaitée entre le dispositif de fermeture 13 et la partie filtrante 2. Un tel moyen de blocage renforce la liaison mécanique entre le dispositif de fermeture 13 et la partie filtrante 2, afin d'éviter de rompre le moyen de séparation 23 pendant l'insertion du dispositif de filtration 1 en première monte. Le moyen de blocage est sécable afin d'autoriser une série de flexion entre le dispositif de fermeture 13 et la partie filtrante 2, en vue de rompre le moyen de séparation 23. Le moyen de blocage est sécable en ce sens qu'il peut être coupé, par exemple à l'aide d'une pince coupante. Le moyen de blocage est réalisée en un matériau plastique, tel qu'un polypropylène, présentant une épaisseur maximum de 4 mm.

## Revendications

1. Dispositif de filtration (1) d'un flux d'air pour une installation de ventilation d'un véhicule, comprenant une partie filtrante (2) comprenant un média filtrant (3) entouré par un cadre (4) et destinée à être traversée par le flux d'air et un dispositif de fermeture (13), destiné à obturer une ouverture ménagée dans un boîtier de l'installation de ventilation, le dispositif de filtration (1) comportant au moins un moyen de séparation (23) comprenant au moins une jonction (25, 37, 38) formée d'un amincissement localisé d'un bandeau de liaison (22) reliant le cadre (4) de la partie filtrante (2) et le dispositif de fermeture (13), apte à autoriser une séparation du dispositif de fermeture (13) et de la partie filtrante (2) **caractérisé en ce que** le moyen de séparation (23) comprend au moins deux fente (33, 34, 35) traversant le bandeau de liaison (22), **en ce que** la jonction (37, 38) s'étend entre lesdites deux fentes (33, 34, 35) traversant le bandeau de liaison (22), **en ce qu'**il est prévu au moins un moyen de blocage sécable (44), apte à contrôler la séparation entre le dispositif de fermeture (13) et la partie filtrante (2), le moyen de blocage sécable (44) étant formé par une encoche (45) débouchant sur une tranche du bandeau de liaison (22) à proximité de la première fente (33) et/ou la deuxième fente (35), et **en ce que** la partie du bandeau de liaison (22) située entre la première fente (33) et l'encoche (45) sert de moyen de blocage interdisant toute inclinaison non souhaitée entre le dispositif de fermeture (13) et la partie filtrante (2).

2. Dispositif de filtration (1) selon la revendication 1, dans lequel la partie filtrante (2) est délimitée par un premier plan (11) définissant une face d'entrée du flux d'air à travers la partie filtrante (2), le moyen de séparation (23) s'étendant dans le premier plan (11).

3. Dispositif de filtration (1) selon la revendication 1, dans lequel la partie filtrante (2) est délimitée par un deuxième plan (12) définissant une face de sortie du flux d'air hors de la partie filtrante (2), le moyen de séparation (23) s'étendant dans le deuxième plan (12).

4. Dispositif de filtration (1) selon la revendication 1, dans lequel la partie filtrante (2) est délimitée par un premier plan (11) définissant une face d'entrée du flux d'air à travers la partie filtrante (2) et par un deuxième plan (12) définissant une face de sortie du flux d'air hors de la partie filtrante (2), le moyen de séparation s'étendant dans un troisième plan (30) distinct et compris entre le premier plan (11) et le deuxième plan (12).

5. Dispositif de filtration (1) selon l'une des revendications précédentes, dans lequel le moyen de séparation (23) comprend une première fente (33), une deuxième fente (35) et au moins une troisième fente (34) intercalée entre la première fente (33) et la deuxième fente (35).

6. Dispositif de filtration (1) selon la revendication 5, dans lequel une première jonction (37) s'étend entre la première fente (33) et la troisième fente (34) et une deuxième jonction (38) s'étend entre la deuxième fente (35) et la troisième fente (34).

## Patentansprüche

1. Filtervorrichtung (1) eines Luftstroms für eine Lüftungsanlage eines Fahrzeugs, die einen filternden Teil (2), der ein Filtermedium (3) enthält, das von einem Rahmen (4) umgeben und dazu bestimmt ist, von dem Luftstrom durchquert zu werden, und eine Schließvorrichtung (13) enthält, die dazu bestimmt ist, eine Öffnung zu verschließen, die in einem Gehäuse der Lüftungsanlage ausgespart ist, wobei die Filtervorrichtung (1) mindestens eine Trenneinrichtung (23) aufweist, die mindestens eine Verbindung (25, 37, 38) enthält, die von einer lokalen Verdünnung eines Verbindungsstreifens (22) geformt wird, der den Rahmen (4) des filternden Teils (2) und die Schließvorrichtung (13) verbindet, fähig, eine Trennung der Schließvorrichtung (13) und des filternden Teils (2) zu erlauben, **dadurch gekennzeichnet, dass** die Trenneinrichtung (23) mindestens zwei Schlitze (33, 34, 35) enthält, die den Verbindungsstreifen (22) durchqueren, dass die Verbindung (37, 38) sich zwischen den den Verbindungsstreifen (22) durchquerenden zwei Schlitzen (33, 34, 35) erstreckt, dass mindestens eine trennbare Blockiereinrichtung (44) vorgesehen ist, die die Trennung zwischen der Schließvorrichtung (13) und dem filternden Teil (2) steuern kann, wobei die trennbare Blockiereinrichtung (44) von einer Kerbe (45) geformt wird, die an einer Schmalseite des Verbindungsstreifens (22) in der Nähe des ersten Schlitzes (33) und/oder des zweiten Schlitzes (35) mündet, und dass der Bereich des Verbindungsstreifens (22), der sich zwischen dem ersten Schlitz (33) und der Kerbe (45) befindet, als Blockiereinrichtung dient, die jede nicht gewünschte Neigung zwischen der Schließvorrichtung (13) und dem filternden Teil (2) verhindert.

2. Filtervorrichtung (1) nach Anspruch 1, wobei der filternde Teil (2) von einer ersten Ebene (11) begrenzt wird, die eine Eingangsseite des Luftstroms durch den filternden Teil (2) hindurch definiert, wobei die Trenneinrichtung (23) sich in der ersten Ebene (11) erstreckt.

3. Filtervorrichtung (1) nach Anspruch 1, wobei der filternde Teil (2) von einer zweiten Ebene (12) begrenzt wird, die eine Ausgangsseite des Luftstroms aus dem filternden Teil (2) definiert, wobei die Trenneinrichtung (23) sich in der zweiten Ebene (12) erstreckt.

4. Filtervorrichtung (1) nach Anspruch 1, wobei der filternde Teil (2) von einer ersten Ebene (11), die eine Eingangsseite des Luftstroms durch den filternden Teil (2) hindurch definiert, und von einer zweiten Ebene (12) begrenzt wird, die eine Ausgangsseite des Luftstroms aus dem filternden Teil (2) definiert, wobei die Trenneinrichtung sich in einer unterschiedlichen dritten Ebene (30) erstreckt, die zwischen der ersten Ebene (11) und der zweiten Ebene (12) liegt.

5. Filtervorrichtung (1) nach einem der vorhergehenden Ansprüche, wobei die Trenneinrichtung (23) einen ersten Schlitz (33), einen zweiten Schlitz (35) und mindestens einen dritten Schlitz (34) enthält, der zwischen den ersten Schlitz (33) und den zweiten Schlitz (35) eingefügt ist.

6. Filtervorrichtung (1) nach Anspruch 5, wobei eine erste Verbindung (37) sich zwischen dem ersten Schlitz (33) und dem dritten Schlitz (34) erstreckt und eine zweite Verbindung (38) sich zwischen dem zweiten Schlitz (35) und dem dritten Schlitz (34) erstreckt.

## Claims

1. Airflow filtration device (1) for a vehicle ventilation installation, comprising a filtering part (2) comprising a filtering medium (3) surrounded by a frame (4) and intended to have the flow of air passing through it, and a closure device (13) intended to close off an opening formed in a housing of the ventilation installation, the filtration device (1) comprising at least one separation means (23) comprising at least one junction (25, 37, 38) formed of a local thinning of a connecting strip (22) connecting the frame (4) of the filtering part (2) and the closure device (13), able to allow the closure device (13) and the filtering part (2) to be separated, **characterized in that** the separation means (23) comprises at least two slots (33, 34, 35) passing through the connecting strip (22), **in that** the junction (37, 38) extends between the said two slots (33, 34, 35) that pass through the connecting strip (22), **in that** at least one frangible immobilising means (44) is provided and is able to control separation between the closure device (13) and the filtering part (2), the frangible immobilising means (44) being formed of a notch (45) opening onto an edge face of the connecting strip (22) near the first slot (33) and/or the second slot (35), and **in that** the part of the connecting strip (22) that is situated between the first slot (33) and the notch (45) acts as an immobilising means preventing any undesired inclination between the closure device (13) and the filtering part (2).

2. Filtration device (1) according to Claim 1, in which the filtering part (2) is delimited by a first plane (11) defining an inlet face for the flow of air to enter through the filtering part (2), the separation means (23) extending in the first plane (11).

3. Filtration device (1) according to Claim 1, in which the filtering part (2) is delimited by a second plane (12) defining an outlet face for the flow of air to leave the filtering part (2), the separation means (23) extending in the second plane (12).

4. Filtration device (1) according to Claim 1, in which the filtering part (2) is delimited by a first plane (11) defining an inlet face for the flow of air to enter through the filtering part (2) and by a second plane (12) defining an outlet face for the flow of air to leave the filtering part (2), the separation means extending in a third plane (30) that is distinct and lies between the first plane (11) and the second plane (12).

5. Filtration device (1) according to one of the preceding claims, in which the separation means (23) comprises a first slot (33), a second slot (35) and at least a third slot (34) interposed between the first slot (33) and the second slot (35).

6. Filtration device (1) according to Claim 5, in which a first junction (37) extends between the first slot (33) and the third slot (34) and a second junction (38) extends between the second slot (35) and the third slot (34).
